# EUROPÄISCHE PATENTSCHRIFT

(11) **EP 1 710 260 B1**
(45) Veröffentlichungstag und Bekanntmachung des Hinweises auf die Patenterteilung: **13.01.2010**
(21) Anmeldenummer: 05007826.0
(22) Anmeldetag: 09.04.2005
(51) Int. Cl.: C08F 6/22, C08J 3/16

(54) **Verfahren zur kontinuierlichen Agglomeration von PVC-Dispersionen**
Process for continuous agglomeration of PVC dispersions
Procédé d'agglomération continue de dispersions de PVC

(43) Veröffentlichungstag der Anmeldung: 11.10.2006
(73) Patentinhaber: VESTOLIT GmbH & Co. KG, 45764 Marl (DE)
(72) Erfinder: Bordeianu, Radu, Dr., 45772 Marl (DE); Gehrke, Jan-Stephan, Dr., 45768 Marl (DE); Hamsen, Karl-Heinz, 48249 Dülmen-Merfeld (DE)
(74) Vertreter: Polypatent

(56) Entgegenhaltungen:
- EP-A- 0 611 788
- EP-A- 0 657 488
- WO-A-03/022891
- WO-A-03/029305
- GB-A- 2 116 983
- US-A- 4 305 962
- US-A1- 2004 039 110
- US-A1- 2004 082 746

## Beschreibung

Die vorliegende Erfindung betrifft ein kontinuierliches, zweistufiges Verfahren zur Fällung von wässrigen Vinylchlorid Homo- und Copolymer-Dispersionen.

PVC oder PVC-Copolymere, hergestellt im Emulsions- oder Mikrosuspensionsverfahren, werden üblicherweise aus den entsprechenden wässrigen Dispersionen über Sprühtrocknung in Pulverform erhalten. Die verwendeten Sprühtrocknungsverfahren haben jedoch den Nachteil, dass sie sehr energieintensiv sind. Das ist darin begründet, dass die gesamte in der Dispersion enthaltene Wassermenge verdampft werden muss.

Um die Energiebilanz zu verbessern, wurden Verfahren zur PVC-Agglomeration entwickelt. In diesen Verfahren werden die in der Dispersion enthaltenen Primärteilchen zu größeren, leicht filtrierbaren Teilchenaggregaten agglomeriert und über eine Fest-Flüssig-Trennung teilweise entwässert. Bei den bekannten Agglomerationsverfahren werden die Teilchenaggregate durch reine Elektrolytzugabe, mechanische Scherung, thermische Belastung oder durch Kombination der genannten Faktoren erzielt (US 2482038, DE 1958498A, DE 3830562A1, DE 1009810, US 3245970, US 2647103).

Die Nachteile der thermischen Belastung liegen in der Verschlechterung der Energiebilanz sowie der Thermostabilität und Farbe des Polymers. Die Verfahren die eine mechanische Beanspruchung der Dispersion beinhalten erfordern mechanisch anspruchsvolle und störanfällige Apparate.

Des weiteren werden in der Patentliteratur Verfahren beschrieben, bei denen die wässrige Kunststoffdispersion durch Gefrieren koaguliert wird (DE 3230128A, DE 1645675A, NL 64011418). Diese Verfahren sind aufgrund der hohen Energiekosten für die Kälteerzeugung wirtschaftlich unattraktiv.

Die Wirtschaftlichkeit der Polymerisationsverfahren ist unmittelbar von der Filtrierbarkeit bzw. Filtrationsgeschwindigkeit und dem Restwassergehalt nach der Fest-Flüssig-Trennung abhängig. Nach anschließendem Trocknen und Mahlen resultiert ein Pulver welches dem im Sprühtrocknungsverfahren hergestelltem Pulver ähnlich ist.

Solche Pulver werden größtenteils mit Weichmacher zu Plastisolen umgesetzt. Die Verarbeitbarkeit der Plastisole wird von der Pastenviskosität entscheidend beeinflusst. Für die meisten Anwendungen (Streichverfahren, Kalandrieren) ist eine niedrige Pastenviskosität für die Erhöhung der Produktivität von Vorteil.

Mehrstufige Agglomerations-Verfahren, bei denen schon in der ersten Stufe die für die Koagulation notwendige gesamte Elektrolytmenge zugegeben wird, sind aus der Patentliteratur bekannt (DE 1958498).

WO03022891 offenbart ein Verfahren zur kontinuierlichen Koagulation von Latex, die durch Emulsion hergestellt worden ist, dadurch gekennzeichnet, dass die Koagulation durch Elektrolytzugabe zweistufig durchgeführt wird, wobei die Kontaktzeit in der ersten Stufe zwischen 2 und 5 Minuten liegt und die Kontaktzeit in der zweiten Stufe zwischen 10 und 25 Minuten liegt.

Es wurde gefunden, dass die Durchführung der PVC-Latex Agglomeration in einem kontinuierlichen zweistufigen Verfahren, bei dem die Elektrolytzugabe derart erfolgt, dass die Elektrolytkonzentration in einer 1. Stufe niedriger als die für die Koagulation notwendige ist, und erst in einer zweiten Stufe die für die Koagulation notwendige Elektrolytkonzentration erreicht, zu verbesserten Filtrierbarkeit, geringerem Restwassergehalt im Filterkuchen und geringerer Pastenviskosität führt.

Als Elektrolyt können Alkali-, Erdalkali- und Aluminiumsalze der Schwefel-, Salpeter-, oder Phosphorsäure, bevorzugt Calcium-, Barium- und Natriumchlorid eingesetzt werden. Die Wahl des Elektrolyten richtet sich nach der Art der im Latex vorhandenen Emulgatoren.
Die für die Einstellung der optimalen Fällungsbedingungen erforderliche Elektrolytmenge kann in einem Batch-Vorversuch ermittelt werden. Die Vorgehensweise und die Kombintationsmöglichkeiten von geeigneten Elektrolyten mit vorliegenden Emulgatoren liegt im üblichen Kenntnisbereichs eines Fachmanns auf diesem Gebiet.

Für eine optimale Fällung liegt der Feststoffgehalt der Ausgangsdispersion üblicherweise bei kleiner 50 Gew.% bevorzugt zwischen 20-40 Gew.%.

Um ein Sintern der Polymerteilchen zu unterbinden wird der Koagulationsprozess bevorzugt unterhalb der Glasübergangstemperatur des bearbeiteten Polymers durchgeführt.

Die Kontaktzeit in jedem Koagulationsreaktor liegt zwischen 2 und 5 Minuten. Kürzere Kontaktzeiten führen meistens zu unvollständiger Agglomeration und entsprechend schlechter Filtrierbarkeit, längere Kontaktzeiten beeinträchtigen die Wirtschaftlichkeit des Verfahrens, da entweder größere Apparate oder geringere Durchsätze erforderlich sind.

Die aus der 2. Fällstufe resultierende agglomerierte Dispersion wird einer Fest-Flüssig-Trennung unterzogen. Als Apparate eignen sich hierfür beispielsweise Filterpressen, Bandfilter, vorzugsweise mit nachgeschalteter Filterkuchenpresse oder Zentrifugen.

Der feuchte Filterkuchen wird anschließend getrocknet und gemahlen. Als Apparate eigenen sich hierfür beispielsweise alle üblichen Mahltrockner.

### Beispiel 1

Kontinuierliches Verfahren zur Agglomeration von PVC-Dispersionen in einem 2-Stufenverfahren

Aus einem 650 Liter Vorlagetank wird mittels einer Schlauchpumpe eine nach dem Mikrosuspensionsverfahren hergestellte PVC-Dispersion mit einem Feststoffgehalt von 30 Gew.% bei 60 °C durch eine zweistufige Rührkesselkaskade gefördert. Die Rührkesselkaskade besteht dabei aus zwei 12 Liter Reaktoren. Die mittlere Verweilzeit pro Kessel beträgt jeweils 3 min. Zur Stabilisierung der Dispersion wurde ein Alkylbenzolsulfonat (1 Gew.% bezogen auf eingesetztes Monomer) in Kombination mit einem Fettalkohol (1 Gew.% bezogen auf eingesetztes Monomer) verwendet.

Für die Agglomeration der Dispersion gibt man in die Kaskade eine Elektrolytlösung (5%ige CaCl₂-Lösung) derart zu, dass in die 1. Stufe 40% der für die Agglomeration erforderlichen Elektrolytmenge und in die zweiten Stufe die restlichen 60% Elektrolyt eingebracht werden. Die für die Agglomeration erforderliche Elektrolytmenge wurde zuvor in einem Batch Versuch mit 15 mmol/L wässrige Phase ermittelt.

Die aus der 2. Stufe austretende agglomerierte Dispersion wird direkt auf eine Bandfilteranlage mit nachgeschalteter Filterkuchenpresse geführt.
Die erhaltenden Filterkuchen werden anschließend in einem Mahltrockner getrocknet.

| Prozessparameter | | |
|---|---|---|
| a) Agglomeration: | | |
| | Feststoffgehalt der Dispersion: | 30 Gew.% |
| | Agglomerationstemperatur: | 60 °C |
| | Elektrolyt: | CaCl₂ |
| | Verweilzeit/Reaktor: | 180 s |
| | Elektrolytverhältnis 1. Stufe/2. Stufe: | 40/60 |

| b) Filtration: | | |
|---|---|---|
| | Durchsatz Dispersion: | 300 L/h |
| | Eingangstemperatur Warmluft: | 160 °C |
| | Ausgangstemperatur: | 60 °C |

| Ergebnisse: | |
|---|---|
| | |
| Wassergehalt vor der Presse: | 36 Gew.% |
| Wassergehalt nach der Presse: | 24 Gew.% |
| Feststoffgehalt im Filtrat: | 0.23 Gew.% |
| Restfeuchtigkeit Ausgang Trockner: | < 0.3 Gew.% |

Das erhaltene Pulver wurden mit Weichmacher (Di-(2-ethylhexyl)phthalat) im Verhältnis 100:60 zu Plastisolen verarbeitet. Die Pastenviskosität wurde mit einem Kegel-Platte-Viskosimeter bei einer Schergeschwindigkeit von 1 s⁻¹ nach 2 h und 168 h bestimmt.
Folgende Pastenviskositäten wurden erhalten.
Pastenviskosität: η = 7 Pa·s (2 h) bzw. 15 Pa·s (168 h)

### Beispiel 2

Die Versuchsdurchführung erfolgte wie in Beispiel 1 beschrieben, jedoch wurde hier die gesamte für die Agglomeration erforderliche Elektrolytmenge der Dispersion in einer Stufe zugegeben.

| Ergebnisse: | |
|---|---|
| | |
| Wassergehalt vor der Presse: | 40 Gew.% |
| Wassergehalt nach der Presse: | 25 Gew.% |
| Feststoffgehalt im Filtrat: | 0.23 Gew.% |
| Restfeuchtigkeit Ausgang Trockner: | < 0.3 Gew.% |

Die wie in Beispiel 1 beschriebene Bestimmung der Patenviskosität ergab folgende Werte. Pastenviskosität: η = 12 Pa·s (2 h) bzw. 24 Pa·s (168 h)

## Patentansprüche

1. Verfahren zur kontinuierlichen Koagulation von Latex/Latices, die durch Emulsions- oder Mikrosuspensionspolymerisation hergestellt worden sind, **dadurch gekennzeichnet, dass** die Koagulation durch Elektrolytzugabe zweistufig durchgeführt wird, wobei die Elektrolytkonzentration in einer 1. Stufe niedriger als die für die Koagulation notwendige ist und die Kontaktzeit in jeder der beiden Stufen zwischen 2 und 5 Minuten liegt.

2. Verfahren gemäß Anspruch 1, **dadurch gekennzeichnet, dass** die Latices aus Vinylchlorid und damit copolymerisierbaren Monomeren hergestellt werden.

3. Verfahren gemäß Anspruch 1 oder 2, **dadurch gekennzeichnet, dass** das Verfahren in einer zweistufigen Rührkesseikaskade durchgeführt wird.

4. Verfahren gemäß einem der Ansprüche 1 bis 3, **dadurch gekennzeichnet, dass** das Verhältnis der Elektrolytkonzentration in der 1. zur 2. Koagulationsstufe zwischen 0.2 und 5, bevorzugt zwischen 0.4 und 1 liegt.

5. Verfahren gemäß einem der Ansprüche 1 bis 4, **dadurch gekennzeichnet, daß** die Koagulationstemperatur, bei der gearbeitet wird unterhalb der Glasübergangstemperatur des Polymers liegt.

## Claims

1. A process for the continuous coagulation of latex/latices which have been produced by emulsion or microsuspension polymerisation, **characterised in that** the coagulation is carried out in two stages by electrolyte addition, wherein the electrolyte concentration in a first stage is lower than that needed for the coagulation and the contact period in each of the two stages is between 2 and 5 minutes.

2. The process according to claim 1, **characterised in that** the latices are produced from vinyl chloride and monomers that can be copolymerised therewith.

3. The process according to claim 1 or 2, **characterised in that** the process is carried out in a two-stage cascade of stirred vessels.

4. The process according to one of claims 1 to 3, **characterised in that** the ratio of the electrolyte concentration in the 1^{st} coagulation stage to the 2^{nd} is between 0.2 and 5 and preferably between 0.4 and 1.

5. The process according to one of claims 1 to 4, **characterised in that** the coagulation temperature at which work is carried out is below the glass transition temperature of the polymer.

## Revendications

1. Procédé pour la coagulation en continu de latex, qui ont été fabriqués par polymérisation en émulsion ou en micro-suspension, **caractérisé en ce que** la coagulation est réalisée en deux stades par addition d'électrolyte, dans lequel la concentration d'électrolyte au 1^{er} stade est inférieure à celle nécessaire à la coagulation et le temps de contact à chacun des stades se situe entre 2 et 5 minutes.

2. Procédé selon la revendication 1, **caractérisé en ce que** les latex sont fabriqués à partir de chlorure de vinyle et de monomères copolymérisables avec celui-ci.

3. Procédé selon la revendication 1 ou 2, **caractérisé en ce que** le procédé est réalisé dans des cuves agitées disposées en cascade en deux stades.

4. Procédé selon l'une quelconque des revendications 1 à 3, **caractérisé en ce que** le rapport de la concentration d'électrolyte au 1^{er} stade de coagulation à celle au 2^{nd} stade de coagulation se situe entre 0,2 et 5, de préférence entre 0,4 et 1.

5. Procédé selon l'une quelconque des revendications 1 à 4, **caractérisé en ce que** la température de coagulation, à laquelle on opère, se situe en dessous de la température de transition vitreuse du polymère.
